# EUROPÄISCHE PATENTSCHRIFT

(11) **EP 2 644 340 B1**
(45) Veröffentlichungstag und Bekanntmachung des Hinweises auf die Patenterteilung: **31.07.2019**
(21) Anmeldenummer: 13173339.6
(22) Anmeldetag: 05.12.2008
(51) Int. Cl.: B27N 3/04, B27N 1/02, C08L 97/02

(54) **Verfahren zur Herstellung von Holzwerkstoffen aus lignocellulosehaltigen Zerkleinerungsprodukten und solche Holzwerkstoffe**
Method for manufacturing wooden materials made of hackled products containing lignocellulose and such wooden materials
Procédé de fabrication de matières dérivées du bois à partir de lignocellulose contenant des produits de broyage et une telle matière dérivée du bois

(43) Veröffentlichungstag der Anmeldung: 02.10.2013
(62) Teilanmeldung aus: 08021161.8
(73) Patentinhaber: SWISS KRONO Tec AG, 6004 Luzern (CH)
(72) Erfinder: Kalwa, Norbert, Dr., 32805 Horn-Bad Meinberg (DE); Grunwald, Dirk, Dr., 10319 Berlin (DE)
(74) Vertreter: Kröncke, Rolf

(56) Entgegenhaltungen:
- EP-A- 1 900 788
- WO-A-98/33970
- WO-A-98/37147
- WO-A-2006/042651
- WO-A-2007/000418
- WO-A-2007/012350
- DE-A1- 2 410 746
- DE-A1- 19 810 688
- DE-A1- 19 957 329
- DE-A1-102004 024 509

## Beschreibung

Die Erfindung betrifft ein Verfahren zur Herstellung von Faserplatten aus Lignocellulose-haltigen Hackschnitzeln, bei denen die Emission von flüchtigen organischen Verbindungen (volatile organic compounds (VOC)) vermindert sind gemäß Anspruch 1. Insbesondere betrifft die vorliegende Erfindung ein Verfahren zur Herstellung von Holzwerkstoffen, bei dem den Zerkleinerungsprodukten vor dem Verpressen sowohl ein Oxidationsmittel als auch ein Reduktionsmittel im zeitlichen Abstand hinzugefügt wird.

Des Weiteren richtet sich die vorliegende Erfindung auf durch solche Verfahren herstellbare Faserplatten, einschließlich MDF-Platten. Mit Hilfe des erfindungsgemäßen Verfahrens kann die Emission von VOC sowohl während des Herstellungsverfahrens als auch während der späteren Nutzung der Faserplatten verringert werden. Die Verringerung betrifft sowohl die Emission von Aldehyden aber insbesondere auch die Verringerung der Emission von Terpenen.

### Stand der Technik

Ein gravierendes Problem bei der Nutzung von Holzwerkstoffen, insbesondere unter dem Aspekt der zunehmenden Nutzung von holzhaltigen Produkten in Innenräumen, stellt die Emission von flüchtigen organischen Verbindungen (volatile organic compounds VOC) bei Gebrauch dar. Unter den flüchtigen organischen Verbindungen fallen insbesondere solche organischen Stoffe, deren Retentionszeit im Gaschromatogramm zwischen C6 (Hexan) und C16 (Hexadecan) liegen. Hierunter befinden sich unter anderem gesättigte und ungesättigte Aldehyde aber auch organische Säuren, Alkohole, Carbonsäuren, aliphatische und aromatische Kohlenwasserstoffe, wie Terpene, und viele mehr. Es wurden bereits verschiedenste Ansätze und Vorschläge gemacht, die Emission dieser flüchtigen organischen Verbindungen zu reduzieren. So wurde bereits der Einsatz verschiedener Reduktionsmittel, wie Sulfite oder Bisulfite, zur Reduktion der Aldehydemission vorgeschlagen. Allerdings richten sich die meisten Verfahren ausschließlich auf die Verminderung der Emission von ungesättigten und gesättigten Aldehyden als Teil der flüchtigen organischen Verbindungen. Teilweise erlauben diese Stoffe auch die Verringerung der Emission von Säuren. Neben den genannten Stoffen stellen aber auch die Gruppe der Terpene eine sehr relevante Verbindungsklasse von flüchtigen organischen Verbindungen dar. Hierfür gibt es bisher keine geeigneten Verfahren, deren Emission zu vermindern.

Flüchtige organische Verbindungen ebenso wie sehr flüchtige organische Verbindungen, zu denen unter anderem Ameisensäure und Formaldehyd gezählt werden, können in Abhängigkeit von der Art und dem Zustand der Lignocellulosen, wie Holzart, der Lagerungsdauer, den Lagerungsbedingungen des Holzes beziehungsweise der Zerkleinerungsprodukte der Lignocellulosen, in unterschiedlichen chemischen Zusammensetzungen und Mengen vorkommen. Üblicherweise entstammen die VOCs dabei den Extraktstoffen der Lignocellulosen, z. B. des Holzes oder ihren Umwandlungsprodukten. Prominente Vertreter hiervon sind Terpene, wie alpha-Pinen, beta-Pinen oder delta-3-Caren. Solche Bestandteile finden sich vor allem im Holz der Nadelbäume wieder. Aber auch Aldehyde, wie Pentanal oder andere höhere Aldehyde oder höhere Carbonsäuren werden holzbedingt freigesetzt. Diese Abbauprodukte entstehen u. a. durch langandauernde Oxidationsprozesse von Holzinhaltsstoffen, wie Fettsäuren, aber auch Lignin, Cellulose und Hemicellulose. Das heißt vor allem bei aus Nadelhölzer hergestellten Holzwerkstoffen, wie mitteldichte Faserplatten (MDF) oder OSB-Platten, die große Mengen an Harz und Fetten enthalten, ist eine starke Emission von leicht flüchtigen organischen Verbindungen einschließlich Terpenen zu beobachten.

Aber auch durch die Verwendung bestimmter Klebstoffe für die Herstellung der Holzwerkstoffe können VOCs einschließlich Aldehyde entstehen. Dieses seit langem bekannte Problem der Emission von VOCs konnte im Stand der Technik aber bisher nicht gelöst werden. Obwohl verschiedene Lösungsvorschläge zur Minderung der Emission von ungesättigten und gesättigten Aldehyden und zum Teil der Minderung der Emissionen von Säuren vorgeschlagen wurde, wurden noch keine geeigneten Maßnahmen zur Verminderung der Emission von Terpenen beschrieben. Terpene sind dabei gerade die VOCs, die die anfänglichen Emissionen aus Holzwerkstoffen in der Produktion und bei der Nutzung bestimmen.

WO 2007/000418 A1 beschreibt hellfarbige Holzwerkstoffplatten. Ähnliches findet sich in der WO 2006/042651 A1. Die DE 19957329 A1 betrifft Holzmaterial und Herstellungsverfahren dafür. Aus der WO 98/37147 A1 sind Klebstoffzusammensetzungen und deren Verwendung bekannt. WO 2007/012350 A1 beschreibt Verfahren zur Herstellung von Holzwerkstoff-Artikeln mit geringer Emission von chemischen Verbindungen. EP 1900788 A1 betrifft Materialien zum Fangen von Aldehyden und Verfahren zur Herstellung von Sperrholzplatten.

Es besteht also nach wie vor ein Bedarf nach Verfahren, die insbesondere die Emission von Terpenen als Substanzklasse der flüchtigen organischen Verbindungen aber auch von flüchtigen organischen Verbindungen insgesamt aus Holzwerkstoffen verringern, sowie entsprechend erhaltene Holzwerkstoffe.

Es war nun Aufgabe der vorliegenden Erfindung, Verfahren bereit zu stellen, die bereits vorhandene, insbesondere Terpene, aber auch sich neu bildende flüchtige organische Verbindungen (VOC) in weniger toxische Verbindungen umwandelt, um die Emission dieser VOC und insbesondere der Terpene aus Holzwerkstoffen zu reduzieren. Wichtig ist dabei auch, dass keine den Herstellungsprozess der Holzwerkstoffe störende Substanzen verwendet oder generiert werden. Es ist ebenfalls ein wichtiger Aspekt, dass die Herstellungskosten der Holzwerkstoffe nicht signifikant erhöht werden. Die eingesetzten Mittel dürfen daher nicht toxisch oder karzinogen werden, sollen aber möglichst umfangreich mit der heterogenen Klasse der flüchtigen organischen Substanzen, insbesondere den Terpenen, reagieren.

### Beschreibung der Erfindung

Die Aufgabe wird dadurch gelöst, dass gemäß Anspruch 1 sowohl ein Oxidationsmittel als auch ein Reduktionsmittel zeitlich getrennt den Lignocellulose-haltigen Zerkleinerungsprodukten zugesetzt wird, um in einem ersten Schritt flüchtige organische Verbindungen zu oxidieren und in einem zweiten Schritt flüchtige organische Verbindungen zu reduzieren.

Dieses zeitlich versetzte Zusetzen von Oxidationsmitteln und Reduktionsmitteln erlaubt, die Emission flüchtiger organischer Verbindungen und insbesondere von Terpenen neben gesättigten oder ungesättigten Aldehyden zu verringern.

Überraschenderweise erlaubt das erfindungsgemäße Verfahren - der Einsatz von einem ersten Additiv I mit oxidierender Wirkung und zeitlich anschließend, der Einsatz von einem zweiten Additiv II mit reduzierender Wirkung - sowohl die anfängliche Emission, als auch die Langzeitemission von VOC und insbesondere der Terpene zu reduzieren.

Die durch die Oxidation und anschließender Reduktion entstehenden Verbindungen sind derart, dass sie entweder nicht mehr flüchtig sind oder bei Umsetzung sofort emittieren und somit nicht mehr zu den VOC-Emissionen und insbesondere den Terpen-Emissionen aber auch den Aldehyd-Emissionen beitragen, beziehungsweise die Toxität der entstehenden Verbindungen ist deutlich reduziert.

Das erfindungsgemäße Verfahren zeichnet sich dadurch aus, dass den Lignocellulose-haltigen Zerkleinerungsprodukten, Hackschnitzel, ein erstes Additiv I mit oxidierender Wirkung zugesetzt wird. In einem zeitlich hiervon nachfolgendem Schritt wird ein zweites Additiv II, das reduzierende Eigenschaften besitzt, den mit Additiv I behandelten Lignocellulose-haltigen Zerkleinerungsprodukten zugesetzt.

Das erfindungsgemäße Verfahren ist damit ein Verfahren zur Herstellung von Faserplatten aus Lignocellulose-haltigen Hackschnitzeln umfassend die Schritte:
a) Bereitstellung von Lignocellulose-haltigen Hackschnitzeln,
b) Zusatz eines ersten Additivs I mit oxidierender Wirkung zu den Hackschnitzeln,
c) Ermöglichen des Umsetzens des ersten Additivs I mit oxidierender Wirkung mit Inhaltsstoffen der Hackschnitzeln,
d) Zerfasern der Hackschnitzel,
e) Zugabe eines zweiten Additivs II mit reduzierender Wirkung und anschließendes Umsetzen von Inhaltsstoffen der zerfaserten Zerkleinerungsprodukte mit diesen zweiten Additiv II,
f) Verpressen der so behandelten zerfaserten Lignocellulose-haltigen Zerkleinerungsprodukte mit Klebstoffen unter Wärmebehandlung, wobei zwischen der Zugabe des ersten Additivs I und des zweiten Additivs II ein Trocknungsschritt durchgeführt wird.

Das heißt, das Additiv I wird insbesondere vor dem Trocknen der Hackschnitzel zugefügt, zum Beispiel bei Hackschnitzeln als Basis für Faserplatten vor dem Einlauf des Vorkochers, des Kochers oder Refiners, oder bei bereits zerfaserten Holzschnitzeln vor dem Trockner.

Das erste Additiv I wird somit vor dem Zerfasern hinzugefügt.

Die Zugabe des zweiten Additivs II erfolgt zeitlich nach Zugabe des ersten Additivs I. Die Zugabe des zweiten Additivs II erfolgt nach Zerfasern und Trocknen der Lignocellulose-haltigen Zerkleinerungsprodukte aber vor dem Verpressen. Sowohl das Additiv I als auch das Additiv II können in fester oder flüssiger Form den Zerkleinerungsprodukten zugefügt werden. Das zweite Additiv II kann dabei sowohl vor Zugabe des Klebstoffes als auch nach Zugabe des Klebstoffes zugesetzt werden.

Im Allgemeinen handelt es sich bei dem ersten Additiv I um ein Oxidationsmittel, das insbesondere die Substanzgruppe der Terpene in den flüchtigen organischen Verbindungen oxidiert, zum Beispiel zu Aldehyden. Bevorzugte Oxidationsmittel umfassen bekannte in der Holzwerkstoffherstellung verwendete Oxidationsmittel. Insbesondere können die Oxidationsmittel Wasserstoffperoxid ggf. in Kombination mit einem Fe (II) Salz, Ammoniumpersulfat, Cytochrom P450 Monooxygenasen oder Ammoniumperoxid sein.

Natürlich können auch andere bekannte Oxidationsmittel wie sie aus der Literatur bekannt sind, eingesetzt werden.

Das erste Additiv I wird dabei in einem Bereich von 0,1 bis 10 Gew.-% bezogen auf atro Lignocellulose hinzugefügt, bevorzugt in einer Menge von 0,1 bis 5 Gew.-% bezogen auf atro Lignocellulose, wie 0,2 bis 3 Gew.-%, z.B. 0,5 bis 2 Gew.-%.

Das Aufbringen des Additivs auf die Zerkleinerungsprodukte kann gemäß üblichen Verfahren erfolgen, wie Aufsprühen, Aufstreuen.

Das erste Additiv I wirkt in der Weise, dass es die Terpene zum Teil unter Ringöffnung partiell oxidiert. Bei dieser Oxidation entstehen unter anderem ungesättigte oder gesättigte Aldehyde bzw. in Abhängigkeit von den Oxidationsbedingungen und den Mengen an Oxidationsmittel Carbonsäuren. Zum Beispiel werden Terpenaldehyde, wie Citral oder Citronellal hergestellt. Zum Beispiel erhält man aus dem von alpha-Pinen die Pinonsäure oder Pinonaldehyd und Pinsäure. Den Grad der Oxidation hängt von der Menge an Oxidationsmitteln und den eingesetzten Oxidationsmitteln selbst ab. Bei großen Überschüssen an Oxidationsmittel sind weitergehende Oxidationsschritte bis zu Säuren oder noch weiter möglich, so dass kleinere sehr leicht flüchtige Verbindungen erzeugt werden, wie Aceton oder CO₂. Allerdings ist hier der ökonomische Aspekt zu berücksichtigen, da eine große Menge an Oxidationsmittel die Herstellungskosten wesentlich in die Höhe treiben würde. Entsprechend ist es ausreichend, die Oxidation bis zur Stufe der Aldehyde oder bevorzugter bis zur Carbonsäure durchzuführen, da diese durch andere Mittel einfach abbaubar und die eingesetzte Menge an Oxidationsmittel dabei möglichst gering und somit auch die Kosten möglichst gering gehalten werden können. Des Weiteren können die durch die radikalische Oxidation aus Terpenen während der Oxidation entstehenden reaktiven Zwischenprodukte (üblicherweise Radikale) auch mit Lignin und Cellulose und Hemicellulose reagieren. Diese Umsetzungsprodukte tragen dann ebenfalls nicht mehr zur Emission bei.

Wie genannt, werden die mit Additiv I behandelten Zerkleinerungsprodukte zeitlich daran anschließend mit dem zweiten Additiv II versetzt. Der zeitliche Abstand hierbei sollte zumindest so gewählt sein, dass eine Umsetzung der Terpene mit dem Oxidationsmittel ermöglicht wird. Dieser Zeitraum ist abhängig vom Zerkleinerungsprodukt und den verwendeten Mengen an Oxidationsmittel. Die Zeit sollte bevorzugt mindestens fünf Minuten, wie mindestens 15 Minuten, zum Beispiel 20 Minuten zwischen Zusatz des Additivs I und des Additivs II betragen. Wie ausgeführt liegt ein Trocknungsschritt zwischen dem Zusatz des ersten Additivs I und des zweiten Additivs II. Weiterhin findet der Zerfaserungsschritt bei Hackschnitzeln zwischen dem Zusatz des ersten Additivs I und dem zweiten Additiv II statt. Die Beleimung mit üblichen Klebstoffen kann vor oder nach Zugabe des zweiten Additivs II nach Zerfaserung der Lignocellulose-haltigen Zerkleinerungsprodukte erfolgen. Als Klebstoffe können übliche Klebstoffe eingesetzt werden, wie Klebstoffe auf Phenol-Formaldehyd-Basis (PF-Klebstoff), ein Klebstoff auf Basis von Isocyanaten (PMDI), ein Harnstoff-Formaldehyd-Klebstoff (UF-Klebstoff), ein Melamin-Harnstoff-Formaldehyd-Klebstoff (MUF-Klebstoff), ein Melamin-Harnstoff-Phenol-Formaldehyd-Klebstoff (MUPF-Klebstoff), ein Tannin-Formaldehyd-Klebstoff (TF-Klebstoff) oder ein Gemisch hiervon.

Das zweite Additiv II ist ein Reduktionsmittel und wird bevorzugt ausgewählt aus der Gruppe bestehend aus Salzen der dithionigen Säure MS2O4, wobei M für ein Metall oder für Ammonium steht, Formamidinsulfinsäure, einer Kombination von jeweils mindestens einer Komponente aus Hydrogensulfitsalz und Sulfitsalz ggf. unter weiterer Zugabe von mindestens einer Komponente aus Harnstoff- oder Harnstoffderivaten; Verbindungen mit Aminogruppen enthaltenen Verbindungen, insbesondere Aminosäure(n) enthaltende Verbindungen und Proteine.

Erfindungsgemäß können auch andere bekannte und in der Holzwerkstoffindustrie eingesetzte Reduktionsmittel verwendet werden, wie Hydrogensulfitsalz und Sulfitsalz alleine aber auch Klebstoffe mit Zusatz von proteinhaltigen Verbindungen enthaltend Aminogruppen, wie glutenhaltige Verbindungen, insbesondere Hautleim, Knochenleim, Lederleim; milchproteinhaltige Verbindungen, wie kaseinhaltige Verbindungen; pflanzenproteinhaltige Verbindungen, wie sojahaltige Verbindungen aber auch Mischungen dieser einzelnen Arten.

Dem Fachmann sind geeignete Reduktionsmittel wohl bekannt.

Bevorzugt wird das zweite Additiv II in Mengen 0,1 Gew.-% bis 3 Gew.-% Feststoff bezogen auf atro Lignocellulose hinzugefügt, wie 0,2 bis 2 Gew.-%. Das zweite Additiv II ermöglicht die Reduktion der Emission von insbesondere der Substanzklasse der Aldehyde der VOC. Das heißt die reduzierenden Additive erlauben insbesondere sowohl gesättigte als auch ungesättigte Aldeyhde zu reduzieren. Zum Beispiel kann das Additiv in Lösung oder als Pulver auf die Fasern aufgebracht werden, wobei bei getrockneten Fasern der Einsatz von wässrigen Lösungen bevorzugt ist. Die Beleimung der Fasern kann sowohl vor als auch nach Auftragen des Additivs erfolgen. Das Aufbringen kann zum Beispiel durch Besprühen, das ein gutes Benetzen erlaubt, erfolgen. Da die Oberfläche aber in nicht unerheblicher Menge zu den Gesamtemissionen beiträgt, besteht auch die Möglichkeit auf die bereits vorgestreuten Strandkuchen vor der Presse die Additive aufzudüsen. Das heißt die Zugabe des Additivs II gemäß dem erfindungsgemäßen Verfahren erfolgt zweckmäßiger Weise über betriebsübliche Anlagen zur Klebstoffdosierung, wie Beleimtrommel, Blow-Line Beleimung Blas-Rohr-Beleimung oder Trockenbeleimung. Bei Fasern bietet sich die Verwendung von Lösungen der Additive II in der Blow-Line an.

Das zweite Additiv II fängt somit nicht nur die bereits in den Lignocellulose-haltigen Zerkleinerungsprodukten vorliegenden gesättigten und ungesättigten flüchtigen Aldehyde sowie die organischen Säuren ab, sondern auch die nach Oxidation der Terpene erhaltenen Oxidationsprodukte, wie Aldehyde, Ketone. Durch die erfindungsgemäße Kombination von zuerst einem Oxidationsmittel und zeitlich daran anschließend einem Reduktionsmittel, ist es möglich die flüchtigen organischen Verbindungen, die aus den Lignocellulose-haltigen Zerkleinerungsprodukten emitiert werden, zu reduzieren. Diese Reduktion der Emission ist sowohl für die anfängliche als auch für die Langzeitemission möglich.

Nach Applikation des zweiten Additivs II und des Klebstoff erfolgt eine Behandlung der Lignocellulose-haltigen Zerkleinerungsprodukte derart, dass dem System ausreichend Energie, zum Beispiel durch Wärme, zugeführt wird, dass eine Umsetzung der VOC und gesättigten und ungesättigten Aldehyde mit dem zweiten Additiv II erfolgt. Diese Behandlung kann zum Beispiel das Heißverpressen der Zerkleinerungsprodukte sein, um die Holzfaserplatten zu erhalten, insbesondere MDF-Platten aus Holzfasern.

Bei Lignocellulose-haltigen Zerkleinerungsprodukten handelt es sich bevorzugt um Holzfasern, insbesondere um entsprechende Produkte von Nadelhölzern.

In einem weiteren Aspekt betrifft die vorliegende Erfindung Faserplatten erhältlich gemäß dem erfindungsgemäßen Verfahren. Bei diesen Faserplatten handelt es sich insbesondere MDF-Platten. Diese Faserplatten zeichnen sich durch eine Reduktion der Emission von flüchtigen organischen Verbindungen, insbesondere Terpenen aber auch gesättigten und ungesättigten Aldehyden, aus. Diese Emissionsreduktion ist lang anhaltend und gewährleistet auch eine verringerte Belastung der Umwelt bei Gebrauch der Faserplatten.

Weiterhin wird ein Behandlungsmittel zur Reduktion von flüchtigen organischen Verbindungen aus Holzwerkstoffen beschrieben. Dieses Behandlungsmittel umfasst eine Kombination eines Oxidationsmittels und eines Reduktionsmittels in separaten Gefäßen. Bei den Oxidationsmittel und Reduktionsmittel handelt es sich bevorzugt um die hierin genannten Oxidations- und Reduktionsmittel.

Das erfindungsgemäße Verfahren wird noch einmal dargestellt. Danach erfolgt zuerst die Partikelherstellung, das heißt das Zerhacken des Holzes. Anschließend erfolgt die Zugabe des Additivs I. Diese Zugabe des Additivs I kann im normalen Produktionsablauf zur Herstellung von Faserplatten erfolgen. Nach Zusatz des Additivs I kann ein Umsetzen des Additivs mit Terpenen und anderen flüchtigen organischen Verbindungen erfolgen. Daran schließt sich ein Trocknungsschritt des zerhackten, mit Additiv I behandelten Holzes an. Nach Trocknung erfolgt die Zugabe des Additivs II mit reduzierenden Eigenschaften. Auch die Zugabe des Additivs II kann in dem normalen Produktionsablauf zur Herstellung der Faserplatten eingegliedert sein, zum Beispiel im Blasrohr oder anderer üblicher Beleimeinrichtungen, wie der Blow-Line. Die Zugabe von Additiv II kann dabei vor oder nach Beleimung der zerfaserten Zerkleinerungsprodukte erfolgen. Daran anschließend erfolgt das Heißpressen der gelegten oder gestreuten Fasergruben, um die Faserplatten zu erhalten. Das erfindungsgemäße Verfahren eignet sich insbesondere zur Herstellung von Faserplatten, wie MDF-Platten.

### Hierin beschriebene Ausführungsformen:

1. Verfahren zur Herstellung von Holzwerkstoffen aus Lignocellulose-haltigen Zerkleinerungsprodukten umfassend die Schritte:
   a) Bereitstellung von Lignocellulose-haltigen Zerkleinerungsprodukten,
   b) Zusatz eines ersten Additivs I mit oxidierender Wirkung zu den Zerkleinerungsprodukten,
   c) Ermöglichen des Umsetzens des ersten Additivs I mit oxidierender Wirkung mit Inhaltsstoffen der Zerkleinerungsprodukten,
   d) Zugabe eines zweiten Additivs II mit reduzierender Wirkung und anschließendes Umsetzen von Inhaltsstoffen der Zerkleinerungsprodukten mit diesem zweiten Additiv II,
   e) Verpressen der so behandelten Lignocellulose-haltigen Zerkleinerungsprodukten mit Klebstoffen unter Wärmebehandlung.
2. Verfahren zur Herstellung von Holzwerkstoffen nach Ausführungsform 1, wobei zwischen der Zugabe des ersten Additivs I und des zweiten Additivs II ein Trocknungsschritt durchgeführt wird.
3. Verfahren zur Herstellung von Holzwerkstoffen nach Ausführungsform 1 oder 2, wobei die Lignocellulose-haltigen Zerkleinerungsprodukten gemäß Schritt a) Strands oder Hackschnitzel sind.
4. Verfahren zur Herstellung von Holzwerkstoffen nach einem der Ausführungsformen 1 bis 3, wobei die Zugabe des ersten Additivs I vor dem Trocknen der Strands oder Hackschnitzel erfolgt, vorzugsweise vor dem Nassspanbunker, im Ausfallschacht des Nassspanbunkers, im Einlauf des Trockners, im Vorkocher, Kocher oder Refiner in Abhängigkeit von den Lignocellulose-haltigen Zerkleinerungsprodukten.
5. Verfahren zur Herstellung von Holzwerkstoffen nach einem der vorherigen Ausführungsformen, wobei das zweite Additiv II nach Trocknung und Zerfaserung bzw. Zerspanung der mit Additiv I behandelten Strands oder Hackschnitzel erfolgt.
6. Verfahren nach einem der vorherigen Ausführungsformen, wobei die Zugabe des zweiten Additivs II vor oder nach Beleimung der zerfaserten oder zerspanten Lignocellulose-haltigen Zerkleinerungsprodukte erfolgt.
7. Verfahren nach einem der vorherigen Ausführungsformen, wobei das erste Additiv I ein Oxidationsmittel ist, ausgewählt aus der Gruppe eines Additivs eines Fe (II) Salzes in Kombination mit Wasserstoffperoxid, Wasserstoffperoxid, Ammoniumpersulfat, Cytochrom p 450 Monooxygenasen und Ammoniumperoxid.
8. Verfahren nach einem der vorherigen Ausführungsformen, wobei das erste Additiv I in einem Bereich von 0,1 bis 10 Gew.-% bezogen auf atro Lignocellulose hinzugefügt wird, bevorzugt in einer Menge von 0,1 bis 5 Gew.-% bezogen auf atro Lignocellulose.
9. Verfahren nach einem der vorherigen Ausführungsformen, wobei das zweite Additiv II ein Reduktionsmittel ist, ausgewählt aus der Gruppe bestehend aus Salzen der dithionigen Säure MS₂O₄, wobei M für ein Metall oder für Ammonium steht, Formamidinsulfinsäure, einer Kombination von mindestens einer Komponente aus Hydrogensulfitsalz und Sulfitsalz ggf. unter weiterer Zugabe von mindestens einer Komponente aus Harnstoff- oder Harnstoffderivaten; Verbindungen mit Aminogruppen enthaltenen Verbindung, insbesondere Aminosäure(n) enthaltende Verbindungen und Proteine.
10. Verfahren nach Ausführungsform 9, wobei die Menge des zugebenden zweiten Additivs II zwischen 0,01 Gew.-% und 3 Gew.-% Feststoff bezogen auf atro Lignocellulose liegt.
11. Verfahren zur Herstellung von Holzwerkstoffen nach einem der vorherigen Ausführungsformen, dadurch gekennzeichnet, dass der verwendete Klebstoff ein Phenol-Formaldehyd-Klebstoff, ein Klebstoff auf Basis von Isocyanaten (PMDI), ein Harnstoff-Formaldehyd-Klebstoff, ein Melamin-Harnstoff-Formaldehyd-Klebstoff, ein Melamin-Harnstoff-Phenol-Formaldehyd-Klebstoff, ein Tannin-Formaldehyd-Klebstoff, oder ein Gemisch hiervon ist.
12. Verfahren gemäß einem der vorherigen Ausführungsformen, dadurch gekennzeichnet, dass das erste Additiv I und/oder das zweite Additiv II in Form eines Feststoffes oder in flüssiger Form aufgebracht wird.
13. Holzwerkstoff erhältlich nach einem Verfahren gemäß einem der Ausführungsformen 1 bis 12.
14. Holzwerkstoff gemäß Ausführungsform 13, wobei es sich um Faserplatten, insbesondere MDF-Platten, Spanplatten oder OSB-Platten handelt.
15. Behandlungsmittel zur Reduktion von flüchtigen organischen Verbindungen aus Holzwerkstoffen umfassend eine Kombination eines Oxidationsmittels und eines Reduktionsmittels, wie in einem der Ausführungsformen 1 bis 12 definiert.

## Patentansprüche

1. Verfahren zur Herstellung von Faserplatten aus Lignocellulose-haltigen Hackschnitzeln umfassend die Schritte:
a) Bereitstellung von Lignocellulose-haltigen Hackschnitzeln,
b) Zusatz eines ersten Additivs I mit oxidierender Wirkung zu den Hackschnitzeln,
c) Ermöglichen des Umsetzens des ersten Additivs I mit oxidierender Wirkung mit Inhaltsstoffen der Hackschnitzel,
d) Zerfasern der Hackschnitzel;
e) Zugabe eines zweiten Additivs II mit reduzierender Wirkung und anschließendes Umsetzen von Inhaltsstoffen der zerfaserten Zerkleinerungsprodukte mit diesem zweiten Additiv II,
f) Verpressen der so behandelten zerfaserten Zerkleinerungsprodukte mit Klebstoffen unter Wärmebehandlung, wobei zwischen der Zugabe des ersten Additivs I und des zweiten Additivs II ein Trocknungsschritt durchgeführt wird.

2. Verfahren zur Herstellung von Faserplatten nach Anspruch 1, wobei die Zugabe des ersten Additivs I vor dem Trocknen der Hackschnitzel erfolgt.

3. Verfahren nach Anspruch 2, wobei die Zugabe, im Einlauf des Trockners, im Vorkocher, Kocher oder Refiner in Abhängigkeit von den Zerkleinerungsprodukten erfolgt.

4. Verfahren zur Herstellung von Faserplatten nach einem der vorherigen Ansprüche, wobei das zweite Additiv II nach Trocknung und Zerfaserung der mit Additiv I behandelten Hackschnitzel erfolgt.

5. Verfahren nach einem der vorherigen Ansprüche, wobei die Zugabe des zweiten Additivs II vor oder nach Beleimung der zerfaserten Zerkleinerungsprodukte erfolgt.

6. Verfahren nach einem der vorherigen Ansprüche, wobei das erste Additiv I ein Oxidationsmittel ist, ausgewählt aus der Gruppe eines Additivs eines Fe (II) Salzes in Kombination mit Wasserstoffperoxid, Wasserstoffperoxid, Ammoniumpersulfat, Cytochrom P450 Monooxygenasen und Ammoniumperoxid.

7. Verfahren nach einem der vorherigen Ansprüche, wobei das erste Additiv I in einem Bereich von 0,1 bis 10 Gew.-% bezogen auf atro Lignocellulose hinzugefügt wird, bevorzugt in einer Menge von 0,1 bis 5 Gew.-% bezogen auf atro Lignocellulose.

8. Verfahren nach einem der vorherigen Ansprüche, wobei das zweite Additiv II ein Reduktionsmittel ist, ausgewählt aus der Gruppe bestehend aus Salzen der dithionigen Säure MS₂O₄, wobei M für ein Metall oder für Ammonium steht, Formamidinsulfinsäure, einer Kombination von mindestens einer Komponente aus Hydrogensulfitsalz und Sulfitsalz ggf. unter weiterer Zugabe von mindestens einer Komponente aus Harnstoff- oder Harnstoffderivaten; Verbindungen mit Aminogruppen enthaltenen Verbindung, insbesondere Aminosäure(n) enthaltende Verbindungen und Proteine.

9. Verfahren nach Anspruch 8, wobei die Menge des zugebenden zweiten Additivs II zwischen 0,01 Gew.-% und 3 Gew.-% Feststoff bezogen auf atro Lignocellulose liegt.

10. Verfahren zur Herstellung von Faserplatten nach einem der vorherigen Ansprüche, **dadurch gekennzeichnet, dass** der verwendete Klebstoff ein Phenol-Formaldehyd-Klebstoff, ein Klebstoff auf Basis von Isocyanaten (PMDI), ein Harnstoff-Formaldehyd-Klebstoff, ein Melamin-Harnstoff-Formaldehyd-Klebstoff, ein Melamin-Harnstoff-Phenol-Formaldehyd-Klebstoff, ein Tannin-Formaldehyd-Klebstoff, oder ein Gemisch hiervon ist.

11. Verfahren gemäß einem der vorherigen Ansprüche, **dadurch gekennzeichnet, dass** das erste Additiv I und/oder das zweite Additiv II in Form eines Feststoffes oder in flüssiger Form aufgebracht wird.

12. Faserplatte erhältlich nach einem Verfahren gemäß einem der Ansprüche 1 bis 11, wobei das erste Additiv I ein Oxidationsmittel ist, ausgewählt aus der Gruppe eines Additivs eines Fe (II) Salzes in Kombination mit Wasserstoffperoxid, Wasserstoffperoxid, Ammoniumpersulfat, Cytochrom P450 Monooxygenasen und Ammoniumperoxid und das zweite Additiv II ein Reduktionsmittel ist, ausgewählt aus der Gruppe bestehend aus Salzen der dithionigen Säure MS₂O₄, wobei M für ein Metall oder für Ammonium steht, Formamidinsulfinsäure, einer Kombination von mindestens einer Komponente aus Hydrogensulfitsalz und Sulfitsalz ggf. unter weiterer Zugabe von mindestens einer Komponente aus Harnstoff- oder Harnstoffderivaten; Verbindungen mit Aminogruppen enthaltenen Verbindung, insbesondere Aminosäure(n) enthaltende Verbindungen und Proteine.

13. Faserplatte gemäß Anspruch 12, wobei es sich um MDF-Platten handelt.

## Claims

1. Process for the production of fiberboards from lignocellulose containing wood chips comprising the steps of :
a) providing lignocellulose containing wood chips;
b) adding a first additive I having an oxidizing effect to the wood chips;
c) allowing of reacting of the first additive I having oxidizing effects with ingredients of the wood chips;
d) defibration of the wood chips;
e) addition of a second additive II having a reducing action and subsequent reaction of ingredients of the defibrated comminution products with said second additive II;
f) press molding the treated lignocellulose containing comminution products with adhesives under heat treatment, wherein between the addition of the first additive I and the second additive II a drying step is carried out.

2. The process for the production of fiberboards according claim 1, wherein the addition of the first additive I takes place before drying the wood chips.

3. The method according to claim 2 wherein the addition is carried out for the inlet of the dryer, the precooker, the cooker or refiner depending on the lignocellulose containing comminution products.

4. The process for the production of fiberboards according to any one of the preceding claims wherein the second additive II takes place after drying and defibration of the wood chips treated with additive I.

5. The process according to any one of the preceding claims wherein the addition of the second additive II takes place before or after gluing the defibrated comminution products.

6. The method according to any one of the preceding claims, wherein the first additive I is an oxidizing agent selected from the group of additives of a Fe(II) salt in combination with hydrogen peroxide, hydrogen peroxide, ammonium persulphate, cytochrome P450 monooxygenases and ammonium peroxide.

7. The process according to any one of the preceding claims wherein the first additive I is added in a range of from 0.1 to 10 wt% based on atro lignocellulose, preferably in an amount of 0.1 to 5 wt% based on atro lignocellulose.

8. The process according to any one of the preceding claims wherein the second additive II is a reducing agent selected from the group consisting of salts of the dithionic acid MS₂O₄, wherein M is a metal or ammonium, formamidinesulphinic acid, a combination of at least one component of a hydrogensulphite salt and sulphite salt optionally with further addition of at least one component of urea- or urea derivatives; compounds containing amino-groups, in particular, amino acid(s) containing compounds and proteins.

9. The process according to claim 8, wherein the amount of the second additive II is of from 0.01 wt% to 3 wt% solid based on atro lignocellulose.

10. The method for producing fiberboards according to any one of the preceding claims **characterized in that** the adhesive used is a phenol-formaldehyde adhesive, an adhesive based on isocyanates (PMDI), an urea-formaldehyde adhesive, a melamine-urea-formaldehyde adhesive, a melamine-urea-phenol-formaldehyde adhesive, a tannin-formaldehyde adhesive, or a mixture thereof.

11. The process according to any one of the preceding clams **characterized in that** the first additive I and/or the second additive II is applied in the form of a solid or in liquid form.

12. Fiberboards obtainable according to a process according to any one of claims 1 to 11, wherein the first additive I is an oxidizing agent selected from the group of additives of Fe(II) salt in combination with hydrogen peroxide, hydrogen peroxide, ammonium persulphate, cytochrome P450 monooxygenases and ammonium peroxide and the second additive II is a reducing agent selected from the group consisting of salts of dithionic acid MS₂O₄, wherein M is a metal or ammonium, formamidinesulphinic acid, a combination of at least one component of a hydrogensulphite salt and sulphite salt optionally with further addition of at least one component of urea- or urea derivatives; compounds containing amino-groups, in particular, amino acid(s) containing compounds and proteins.

13. Fiberboard according to claim 12 which are MDF boards.

## Revendications

1. Procédé de fabrication de panneaux de fibres à partir de copeaux de bois contenant de la lignocellulose, comprenant les étapes suivantes :
a) la préparation de copeaux de bois contenant de la lignocellulose,
b) l'ajout d'un premier additif I ayant un effet oxydant aux copeaux de bois,
c) la mise en réaction du premier additif I ayant un effet oxydant avec des composants des copeaux de bois,
d) la mise en fibres des copeaux de bois,
e) l'ajout d'un deuxième additif II ayant un effet réducteur, puis la mise en réaction de composants des produits de broyage mis en fibres avec ce deuxième additif II,
f) la compression des produits de broyage mis en fibres ainsi traités avec des adhésifs sous traitement thermique, une étape de séchage étant réalisée entre l'ajout du premier additif I et du deuxième additif II.

2. Procédé de fabrication de panneaux de fibres selon la revendication 1, selon lequel l'ajout du premier additif I a lieu avant le séchage des copeaux de bois.

3. Procédé selon la revendication 2, selon lequel l'ajout a lieu dans l'entrée du séchoir, dans le dispositif de pré-cuisson, dans le dispositif de cuisson ou dans le raffineur, en fonction des produits de broyage.

4. Procédé de fabrication de panneaux de fibres selon l'une quelconque des revendications précédentes, selon lequel l'ajout du deuxième additif II a lieu après le séchage et la mise en fibres des copeaux de bois traités avec l'additif I.

5. Procédé selon l'une quelconque des revendications précédentes, selon lequel l'ajout du deuxième additif II a lieu avant ou après l'encollage des produits de broyage mis en fibres.

6. Procédé selon l'une quelconque des revendications précédentes, selon lequel le premier additif I est un oxydant, choisi dans le groupe d'un additif d'un sel de Fe (II) en combinaison avec du peroxyde d'hydrogène, du peroxyde d'hydrogène, du persulfate d'ammonium, des monooxygénases de cytochrome P450 et du peroxyde d'ammonium.

7. Procédé selon l'une quelconque des revendications précédentes, selon lequel le premier additif I est ajouté dans une plage allant de 0,1 à 10 % en poids, par rapport à la lignocellulose sèche, de préférence en une quantité de 0,1 à 5 % en poids, par rapport à la lignocellulose sèche.

8. Procédé selon l'une quelconque des revendications précédentes, selon lequel le deuxième additif II est un réducteur, choisi dans le groupe constitué par les sels de l'acide dithioneux MS₂O₄, M représentant un métal ou l'ammonium, l'acide formamidine-sulfinique, une combinaison d'au moins un composant constitué d'un sel d'hydrogénosulfite et d'un sel de sulfite, éventuellement avec ajout supplémentaire d'au moins un composant constitué d'urée ou de dérivés d'urée ; les composés avec un composé contenant des groupes amino, notamment les composés contenant un ou plusieurs acides aminés et les protéines.

9. Procédé selon la revendication 8, selon lequel la quantité du deuxième additif ajouté II est comprise entre 0,01 % en poids et 3 % en poids de solides, par rapport à la lignocellulose sèche.

10. Procédé de fabrication de panneaux de fibres selon l'une quelconque des revendications précédentes, **caractérisé en ce que** l'adhésif utilisé est un adhésif de phénol-formaldéhyde, un adhésif à base d'isocyanates (PMDI), un adhésif d'urée-formaldéhyde, un adhésif de mélamine-urée-formaldéhyde, un adhésif de mélamine-urée-phénol-formaldéhyde, un adhésif de tanin-formaldéhyde ou un mélange de ceux-ci.

11. Procédé selon l'une quelconque des revendications précédentes, **caractérisé en ce que** le premier additif I et/ou le deuxième additif II sont appliqués sous la forme d'un solide ou sous forme liquide.

12. Panneau de fibres pouvant être obtenu par un procédé selon l'une quelconque des revendications 1 à 11, dans lequel le premier additif I est un oxydant, choisi dans le groupe d'un additif d'un sel de Fe (II) en combinaison avec du peroxyde d'hydrogène, du peroxyde d'hydrogène, du persulfate d'ammonium, des monooxygénases de cytochrome P450 et du peroxyde d'ammonium, et le deuxième additif II est un réducteur, choisi dans le groupe constitué par les sels de l'acide dithioneux MS₂O₄, M représentant un métal ou l'ammonium, l'acide formamidine-sulfinique, une combinaison d'au moins un composant constitué d'un sel d'hydrogénosulfite et d'un sel de sulfite, éventuellement avec ajout supplémentaire d'au moins un composant constitué d'urée ou de dérivés d'urée ; les composés avec un composé contenant des groupes amino, notamment les composés contenant un ou plusieurs acides aminés et les protéines.

13. Panneau de fibres selon la revendication 12, qui consiste en des panneaux MDF.
